Europäisches Patentamt

European Patent Office

Office européen des brevets

(19)

(11) Veröffentlichungsnummer: **0 224 634**
**A1**

(12) **EUROPÄISCHE PATENTANMELDUNG**

(21) Anmeldenummer: **86106222.2**

(22) Anmeldetag: **06.05.86**

(51) Int. Cl.⁴ **F16J 15/38**

(30) Priorität: **06.12.85 DE 3543160**

(43) Veröffentlichungstag der Anmeldung:
**10.06.87 Patentblatt 87/24**

(84) Benannte Vertragsstaaten:
**AT BE CH DE FR GB IT LI LU NL SE**

(71) Anmelder: **Firma Carl Freudenberg**
**Höhnerweg 4**
**D-6940 Weinheim/Bergstrasse(DE)**

(72) Erfinder: **Kraus, Reinhold**
**Hoffeldstrasse 8**
**D-6942 Mörlenbach(DE)**

(74) Vertreter: **Weissenfeld-Richters, Helga, Dr.**
**Höhnerweg 2**
**D-6940 Weinheim/Bergstrasse(DE)**

(54) **Gleitringdichtung.**

(57) Gleitringdichtung, bestehend aus einem Gleit--
(4) und einem Haltering (5), die unverdrehbar verbunden und in axialer Richtung federnd aufeinander
abgestützt sind, wobei der Gleit-(4) und der Haltering
(5) einander in einem Abstand radial umschließen
und wobei für die gegenseitige Abdichtung des
Gleit-(4) und des Halteringes (5) ein elastischer O-
Ring (1) vorgesehen ist, wobei der O-Ring (1) in
dem durch den Abstand gebildeten Spalt radial verpreßt ist und wobei der O-Ring (1) durch beiderseitige Vorsprünge (2) (3) entweder des Gleit-(4) oder
des Halteringes (5) axial unverrückbar an demselben
festgelegt und hinter einer Haltekralle (6) des jeweils
anderen Ringes einschnappbar ist, um dessen relative Beweglichkeit in Federrichtung zu begrenzen.

EP 0 224 634 A1

## Gleitringdichtung

Die Erfindung betrifft eine Gleitringdichtung, bestehend aus einem Gleit-und einem Haltering, die unverdrehbar verbunden und in axialer Richtung federnd aufeinander abgestützt sind, wobei der Gleit-und der Haltering einander in einem Abstand radial umschließen und wobei für die gegenseitige Abdichtung des Gleit-und des Halteringes ein Dichtelement vorgesehen ist.

Auf eine Gleitringdichtung der vorgenannten Art nimmt das deutsche Gebrauchsmuster G 20 692 Bezug. Das Dichtelement dient dabei ausschließlich der gegenseitigen Abdichtung des Gleitringes in Bezug auf den Haltering, und es besteht aus einem Faltenbalg, der unlösbar einerseits mit dem Gleit-und andererseits mit dem Haltering verbunden ist. Die technische Herstellung einer solchen Verbindung sowie des Faltenbalges erfordern erhebliche Aufwendungen, was in wirtschaftlicher Hinsicht wenig befriedigend ist. Darüber ist der Faltenbalg in axialer Richtung nur wenig belastbar, weshalb für die Begrenzung der durch die federnde Abstützung des Gleitringes auf dem Haltering verursachten Auseinanderbewegung der beiden Ringe ein diese Bewegung begrenzender Endanschlag vorgesehen ist. Der Endanschlag besteht aus einem ringförmigen Maschinenteil, welches selbständig erzeugt und im Zuge einer relativ aufwendigen Montage mit den übrigen Teilen der Gleitringdichtung zu einer in sich geschlossenen Einheit zusammengefügt wird.

Der Erfindung liegt die Aufgabe zugrunde, eine Gleitringdichtung der eingangs genannten Art derart weiterzuentwickeln, daß sich hinsichtlich der Erzeugung und hinsichtlich des Zusammenführens der einzelnen Teile zu einer in sich geschlossenen Einheit eine wesentliche Vereinfachung ergibt.

Die Gleitringdichtung soll insbesondere einen in einem selbständigen Arbeitsgang erzeugten Endanschlag für die Begrenzung der axialen Auseinanderbewegung der beiden Ringe nicht mehr aufweisen.

Diese Aufgabe wird erfindungsgemäß dadurch gelöst, daß das Dichtelement aus einem elastischen O-Ring besteht, daß der O-Ring in dem durch den Abstand gebildeten Spalt radial verpreßt ist und daß der O-Ring durch beiderseitige Vorsprünge entweder des Gleit-oder des Halteringes axial unverrückbar an demselben festgelegt und hinter einer Haltekralle des anderen Ringes einschnappbar ist, um dessen relative Beweglichkeit in Federrichtung zu begrenzen.

Die denO-Ring in axialer Richtung festlegenden Vorsprünge sind im Regelfalle spiegelbildlich gestaltet. Unsymmetrische Ausbildungen sind ebenfalls möglich und begünstigen in den Fällen die Erzielung eines verbesserten Abdichtungsergebnisses, in denen das Profil des dem abgedichteten Raum zugewandten Vorsprunges kleiner gestaltet ist als dasjenige des anderen Vorsprunges. Eine Querschnittsverminderung bis zu der Größe des Querschnittes der Haltekralle ist in dieser Hinsicht möglich.

Der O-Ring besteht zweckmäßig aus Gummi. Abweichende Werkstoffe mit genügend großer Elastizität lassen sich jedoch ebenfalls verwenden, beispielsweise elastomerer Polyurethan, und zeichnen sich häufig durch ein anwendungsspezifisch verbessertes Verhalten aus. Das Profil des O-Ringes ist zweckmäßig kreisförmig begrenzt und gewährleistet ein besonders gutes Abdichtverhalten. Drei-oder rechteckig begrenzte Profile verbessern die Relativbeweglichkeit des Gleitringes bzw. dessen Führung. Sie können ebenfalls zur Anwendung gelangen.

Der O-Ring der erfindungsgemäßen Gleitringdichtung hat eine doppelte Funktion. Diese besteht zum einen darin, den Gleitring in Bezug auf den Haltering abzudichten, was dadurch erreicht wird, daß der O-Ring im zusammengefügten Zustand beider Teile zwischen diesen radial verpreßt wird, was eine Abdichtung bewirkt. Eine relative Axialverschiebung der beiden Ringe, die beispielsweise als Folge zunehmenden Verschleißes eintreten kann, ist hinsichtlich des diesbezüglichen Ergebnisses ohne jede Bedeutung. Die Doppelfunktion des O-Ringes besteht zum anderen darin, die durch die gegenseitige, federnde Abstützung der beiden Ringe aufeinander bewirkte Auseinanderbeweglichkeit auf einen vorgegebenen Wert zu begrenzen. Dieser Teil der Doppelaufgabe wird dadurch gelöst, daß die Haltekralle auf der dem O-Ring zugewandten Seite mit einer Anschlagfläche versehen ist, an welcher der von dem Gegenring mitgenommene O-Ring bei maximaler Auseinanderbewegung der beiden Ringe in axialer Richtung zur Anlage gelangt. Eine noch weitere Auseinanderbewegung wird hierdurch zuverlässig verhindert.

Das Profil und die radiale Tiefe der Anschlagfläche sind so gestaltet und aufeinander abgestimmt, daß eine über die Anschlagfläche hinausgehende, axiale Verlagerung des O-Ringes sicher vermieden wird. In den meisten Fällen ist eine Ausbildung ausreichend, bei der die Anschlagfläche eben ausgebildet und der Rotationsachse der Gleitringdichtung unter einem rechten Winkel zugeordnet ist.

Die Erstreckung der Anschlagfläche in radialer Richtung soll etwa dem 0,01 -0,4fachen Wert der radialen Erstrekkung des O-Ringes entsprechen. Ausführungen, bei denen die Anschlagfläche hohlkegelig entgegen der Richtung des O-Ringes geöffnet ist, sind jedoch ebenfalls denkbar und gewährleisten eine besonders große Sicherheit gegen eine unzulässig große Auseinanderbewegung der beiden Ringe. Der Kegelwinkel einer entsprechend ausgebildeten Anschlagfläche ist beliebig und liegt zweckmäßig zwischen 90 und 140°.

In Hinblick auf eine vereinfachte Zusammenfügbarkeit der beiden Ringe hat es sich als zweckmäßig erwiesen, wenn die Haltekralle auf der von der Anschlagfläche abgewandten Seite spitzkegelig verjüngt ist. Der Kegelwinkel beträgt zweckmäßig 20 bis 80°, wodurch der mit der Haltekralle versehene Ring nach vorausgegangenem Einfügen des O-Ringes zwischen die ihm beiderseits zugeordneten Vorsprünge des anderen Ringes und der federnden Abstützelemente, leicht mit seiner Haltekralle an dem O-Ring vorbeibewegt und hinter demselben eingeschnappt werden kann. Eine ausreichend große, elastische Verformbarkeit des O-Ringes ist hierfür Voraussetzung. Sie muß so bemessen sein, daß sich im Anschluß an das Einschnappen noch eine ausreichend große radiale Verpressung des O-Ringes zwischen den beiden Ringen ergibt.

Die Haltekralle des einen Ringes und die Vorsprünge des anderen Ringes sind zweckmäßig ringförmig in sich geschlossen ausgebildet. Hierdurch ergibt sich während des Zusammenfügens der einzelnen Teile eine gleichmäßige Belastung des O-Ringes, was unbeabsichtigte und schlecht erkennbare Beschädigungen desselben weitgehend ausschließt.

Ausführungen, bei denen die ringförmig ausgebildete Haltekralle und/oder die ringförmig ausgebildeten Vorsprünge mit auf dem Umfang verteilten Unterbrechungen versehen sind, bedürfen demgegenüber für ihre Herstellung eines verminderten Werkstoffaufwandes, was in Bezug auf die hier zur Anwendung gelangenden, außerordentlich kostspieligen Materialien von Vorteil ist.

Eine beispielhafte Ausführung der erfindungsgemäßen Gleitringdichtung ist in der als Anlage beigefügten Zeichnung dargestellt. Sie wird nachfolgend näher erläutert:

Die gezeigte Gleitringdichtung besteht aus dem Gleitring 4, dem Haltering 5, dem O-Ring 1, sechs gleichmäßig auf dem Umfang verteilten Druckfedern 7, der Verdrehsicherung 8, dem Gegenring 10 und dem Dichtring 11. Es ist im einzelnen folgendes auszuführen:

Der O-Ring 1 besteht aus gummielastischem Werkstoff einer Härte Shore A zwischen 60 cm und 90. Der bevorzugte Wert beträgt 70. Der O-Ring ist in radialer Richtung zwischen dem Gleitring 4 und dem Haltering 5 verpreßt, wodurch sich auch bei einer gegenseitigen, axialen Verlagerung eine gegenseitige Abdichtung ergibt.

Eine relative Verlagerung des O-Ringes 1 in Bezug auf den Gleitring 4 ist ausgeschlossen durch die Vorsprünge 2, 3, die dem O-Ring in axialer Richtung beiderseits zugeordnet sind. Ihr gegenseitiger Abstand ist so bemessen, daß eine Behinderung elastischer Verformungen des O-Ringes 1 während der Montage und des normalen Betriebes ausgeschlossen ist. Die Vorsprünge 2, 3, sind kreisringförmig in sich geschlossen ausgebildet.

Der Haltering 5 ist mit der kreisringförmig in sich geschlossenen Haltekralle 6 versehen. Diese wird auf der dem abgedichteten Raum zugewandten Seite durch die Anschlagfläche 9 begrenzt. Die Anschlagfläche ist der Rotationsachse der Gleitringdichtung senkrecht zugeordnet und hat eine Erstreckung in radialer Richtung, die 0,05-mal so groß ist wie die radiale Erstreckung des O-Ringes. Diese Bemessung ist ausreichend, um eine axial gerichtete Auseinanderbewegung des Gleitringes 4 in Bezug auf den Haltering 5 unter der Wirkung der Kraft der Druckfedern 7 über die Anschlagfläche hinaus zu verhindern.

Der O-Ring ist von kreisförmig begrenztem Profil, welches einen Durchmesser von 3mm aufweist. Die Haltekralle 6 wird in axialer Richtung auf der von dem abgedichteten Raum abgewandten Seite durch eine Kegelfläche begrenzt. Der Kegelwinkel beträgt 40°, was ein beschädigungsfreies Vorbeiführen der Haltekralle 6 an dem in dem Haltering 5 gelagerten O-Ring während der Montage gestattet. Der O-Ring 1 vermag dadurch anschließend hinter der Haltekralle einzuschnappen und tritt vor der Montage der Gleitringdichtung in einen Berührungskontakt zu der Anschlagfläche 9.

Die Druckfedern 7 und die Verdrehsicherung 8 bestehen aus nichtrostendem, metallischem Wirkstoff. Ihre spezielle Gestaltung kann an bekannte Vorbilder angelehnt sein.

Das vorstehend beschriebene Ausführungsbeispiel nimmt Bezug auf eine Gleitringdichtung, bei der die Haltekralle 6 an dem Haltering 5 und die Vorsprünge, zwischen denen der O-Ring gelagert ist, an dem Gleitring 4 festgelegt sind. Die mechanische Belastung des O-Ringes 1 ist bei dieser Ausführung während der Montage besonders gering.

Es muß jedoch der Nachteil in Kauf genommen werden, daß in die nach innen geöffnete Nut des Gleitringes 4 eindringende Fremdstoffe zu einer Beeinträchtigung der elastischen Verformbarkeit des O-Ringes führen können. Der diesbezügliche Nachteil läßt sich vermeiden durch eine umgekehrte Zuordnung der Haltekralle und der Vorsprünge, somit einer Ausführung, bei der die Haltekralle an dem Gleitring 4 und die Vorsprünge an dem Haltering 5 angeordnet sind.

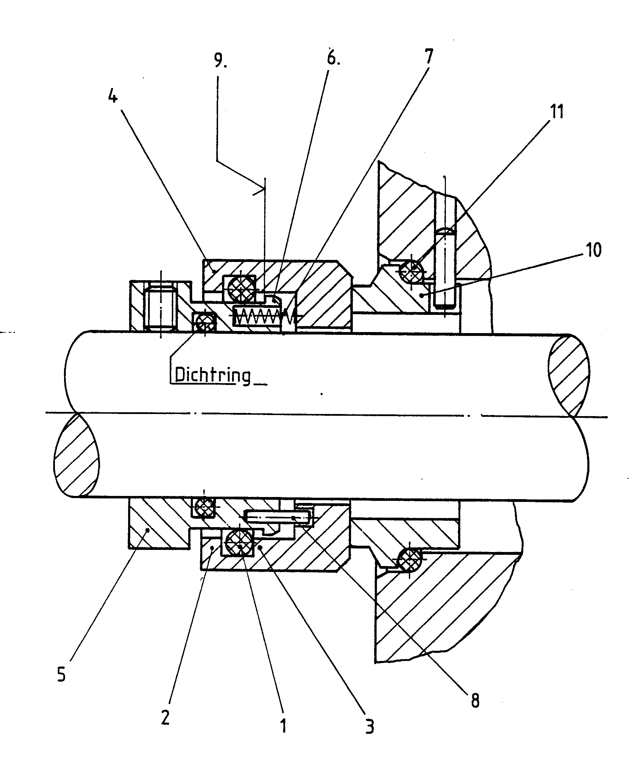

**Ansprüche**

1. Gleitringdichtung, bestehend aus einem Gleit-und einem Haltering, die unverdrehbar verbunden und in axialer Richtung federnd aufeinander abgestützt sind, wobei der Gleit-und der Haltering einander in einem Abstand radial umschließen und wobei für die gegenseitige Abdichtung des Gleit-und des Halteringes ein Dichtelement vorgesehen ist, dadurch gekennzeichnet, daß das Dichtelement aus einem elastischen O-Ring (1) besteht, daß der O-Ring in dem durch den Abstand gebildeten Spalt durchgehend radial verpreßt ist und daß der O-Ring durch beiderseitige Vorsprünge (2,3) entweder des Gleitringes (4) oder des Halteringes - (5) axial unverrückbar an demselben festgelegt und hinter einer Haltekralle (6) des anderen Ringes - (4,5) einschnappbar ist, um dessen relative Beweglichkeit in Federrichtung zu begrenzen.

2. Gleitringdichtung nach Anspruch 1, dadurch gekennzeichnet, daß der Ring (1) ein kreisförmig begrenztes Profil aufweist.

3. Gleitringdichtung nach Anspruch 1 und 2, dadurch gekennzeichnet, daß der Ring aus Gummi besteht.

86106222.2

Dichtring

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 784 213 (R.M. VOITIK) * Figur 4; Spalte 2, Zeilen 60-68; Spalte 4, Zeilen 18-29; Zusammenfassung * | 1-3 | F 16 J 15/38 |
| A | DE-A-3 407 663 (GITS BROS. MFG. CO.) * Figur 2; Zusammenfassung * | 1-3 | |

RECHERCHIERTE SACHGEBIETE (Int. Cl.4)

F 16 J

Der vorliegende Recherchenbericht wurde für alle Patentansprüche erstellt.

| Recherchenort | Abschlußdatum der Recherche | Prüfer |
|---|---|---|
| DEN HAAG | 24-02-1987 | NARMINIO A. |